# EUROPEAN PATENT SPECIFICATION

(11) **EP 3 048 613 B1**
(45) Date of publication and mention of the grant of the patent: **12.06.2019**
(21) Application number: 15151705.9
(22) Date of filing: 20.01.2015
(51) Int. Cl.: G21C 17/00, G21D 3/00, G05B 23/02

(54) **Method for analysis of plant disturbance propagations**
Verfahren zur Analyse der Störungsausbreitung in einer Anlage
Procédé pour analyser des propagations de perturbation dans une installation

(43) Date of publication of application: 27.07.2016
(73) Proprietor: ABB Schweiz AG, 5400 Baden (CH)
(72) Inventor: Arroyo, Esteban, 20099 Hamburg (DE); Fay, Alexander, 22149 Hamburg (DE); Hoernicke, Mario, 76829 Landau (DE); Chioua, Moncef, 69115 Heidelberg (DE)
(74) Representative: Marks, Frank

(56) References cited:
- EP-A2- 0 482 526
- CN-A- 103 713 628
- JP-B2- 3 651 693
- US-A- 5 442 555
- US-A1- 2005 015 217

## Description

The invention is related to a Method for analysis of plant disturbance progations as claimed in claim 1.

It is known that plants such as industrial production lines comprise several assets respectively components, which are linked together on the control side for example by information links and controllers. On the information side, for example, plant components are linked by sensor-, actuator-, and controller- signals. On the product side, the production components are typically linked by a flow of the product itself - this might be for example a fluid flowing through a pipe. In case of a disturbance within the production plant, for example due to a leakage of a pipeline, a larger number of alarms will be generated, most of them are subsequent alarms which are not directly but indirectly effected by the root cause of the disturbance. Thus in case of a disturbance within a plant it is of high importance to insulate those alarm messages, which are related directly to the root cause and to filter out those messages, which are related only indirectly to the root cause of the disturbance or have no relation to the root cause at all.

This invention relates to the field of automated process monitoring and plant alarm management, specifically in in terms of the analysis of plant disturbance propagations for fault diagnosis and alarms grouping. The invention is applicable for the monitoring of continuous and batch processes within a wide range of industrial sectors including chemical, pharmaceutical, nuclear, and oil & gas industries.

State-of-the-art approaches to automatic fault detection (AFD) and alarm grouping in research and industrial practice can be categorized on the basis of the functional method in which they are sustained, e.g. non-linear series analysis, rule-based and expert systems, causal digraphs, and combined approaches involving plant topology. The following sections present the main characteristics and specific examples of methods which are functionally related to or compete with the invention described herein.

### Methods based on Statistical Analysis and Signal Processing

Most of the state-of-the-art data-driven approaches to root cause isolation in large-scale processes tackle the diagnosis problem by following a two-step method. The first step is sustained on the notion that measurements whose spectra are similar are subject to the same plant disturbance. Therefore, a plant-wide spectral analysis using e.g. multivariate analysis of spectral data might detect measurements having similar spectral features and group them accordingly. The second step exploits correlation methods applied on the previously identified process tags groups in order to extract causal relations and determine possible fault root causes. However, the presence of control loop and process recycles makes it highly difficult for data-driven methods to detect certain spectral patterns and/or infer process causalities. Although, information based series analysis such as transfer entropy or Granger causality can alleviate the causal analysis problem under some restrictions on the information content of the analyzed dataset, their performance is not yet fully reliable for industrial application and their scope is rather restricted. Accordingly, in industrial practice there exists a latent need for complementary diagnosis approaches aimed at compensating the limitations of methods purely based on process measurements analysis.

### Ruled-based and Expert Systems

Rule-based and expert systems are knowledge-based methods which are close in style to human problem solving. In these approaches, knowledge is structured in an easy-to-store and easy-to-manipulate way, usually by means of rules or cases. Expert systems are capable of representing expert knowledge, accommodating existing databases, accumulating new knowledge, and making logical inferences and decisions with reasoning. Most automatic fault detection (AFD) expert systems, however, are designed to diagnose faults for specific processes and therefore are highly process-dependent. This fact increases the effort required for their implementation in industrial plants as each automation project entails a time-consuming verification and validation of the plant knowledge.

Nevertheless, there exist some AFD expert systems which integrate process-independent knowledge, for instance, the approaches presented in the patent application US 5,265,035 A. The diagnostic method is based on the observation of imbalances within conservation equations of general validity (e.g. mass, energy, and momentum conservation principles). Inequalities within balances allow observing certain behavioral patterns among key-process variables which can be matched to malfunctions of specific plant components. The diagnosis performance of this approach is, however, limited to malfunction of equipment and does not deal with faults originated in the process (e.g. error in the process sequence or product recipe, change of reactant properties, etc.). Moreover, such an approach is only suited for single-fault diagnosis.

JP3651693B B2 discloses a plant supervisory and diagnostic system which includes a quantitative model database connected to a plant process signal processor from which operation error data is generated in reference to a selected network model. US2005015217 A1 discloses an analyzer arrangement for provision of information about a facility using root cause analysis, the respective system has adaptation device that may modify data model based on additional information.

### Causal Digraphs

A Signed Directed Graph or Signed Digraph (SDG) is a qualitative model approach to fault diagnosis that incorporates causal analysis. Basically, it is a map showing the relationship of the process variables by means of nodes and directed arcs. It also may reflect the behavior of the equipment involved as well as general system topology, as explained in L. Chiang; E. Russel; R. Braatz: Fault Detection and Diagnosis in Industrial Systems, Springer, 2001*.*

SDG-based AFD methods are characterized for its suitability to describe process connectivity and behavior; however, some shortcomings such as difficulties for dealing with multiple fault diagnosis and transient responses have limited its industrial application.

State-of-the-art approaches to AFD and alarm grouping have several drawbacks mostly in terms of performance and industrial applicability:
- Performance of methods based on process data analysis is limited by the quality and richness of the information content of available process datasets, and it is sensibly affected when dealing with the effects of control structures and process recycles.
- Current methods based on classic causal digraphs and decision trees integrate neither component specific knowledge (plant assets attributes) nor dynamic process factors, and are limited to static and not always updated variables relations.
- Non-dynamic causal digraphs exhibit low performance when dealing with multiple-fault diagnosis and process transient responses.
- Most process diagnostic expert systems are designed to diagnose faults for specific processes, i.e. they are highly process-dependent. Such a shortcoming results in a tedious and time-consuming engineering of automation solutions.
- Implementation of process-dependent methods demands a complex and error-prone development phase, especially due to extensive efforts required during the derivation of models and their respective validation for each plant.

It is objective of the invention to provide a method for analysis of plant disturbance propagations, which overcomes those drawbacks.

This problem is solved by a method for analysis of plant disturbance propagations of the aforementioned kind as claimed in claim 1.

Basic idea of the invention is the analysis of plant disturbance propagations based on the combined monitoring of different but interrelated propagation carriers, i.e., product (subdivided in pressure, flow, and temperature), and information (subdivided in sensor, controller and actuator signals).

The method of the invention is foreseen to be executed by a software program product running on a computing device with a data memory. A computing device might be for example a standard personal computer with an input device and a display, which is linked to the control system of a plant. Thus all required data of the plant are available at the computing device.

The underlying notion of the method is that certain characteristics of the plant assets - static and dynamic disturbance-related factors - determine the behavior and likelihood of disturbances travelling through the process of the plant transported by complex combinations of the propagation carriers. Accordingly, the invention relies on the systematic evaluation of disturbance-related factors (plant-component-specific and process-specific) within the different carriers for the estimation of the likelihood of combined fault propagation-paths.

Such a procedure is carried out by a) the event-triggered creation of a Smart Causal Digraph (SCDG), i.e. a dynamic causal structure relating plant topology, flow directionality, propagation carriers, and properties of the plant assets / components, and b) the dynamic consultation of a Propagation Look-Up Table (PLUT) containing evaluation functions for the likelihood estimation of each structural element within the SCDG and its possible associations. As a result, the proposed method allows for the isolation of disturbance zones based on their propagation likelihood and thereby, it can serve as a tool for automated fault diagnosis and alarm management.

The method is process-independent and can be virtually applied to any continuous or batch process in industrial facilities ranging from chemical, pharmaceutical, nuclear, to oil & gas business industries. Such key-features not only decrease the effort involved during development of new systems but eliminate the time-consuming process of knowledge verification and validation.

A Smart Causal Digraph (SCDG) respectively a digraph matrix according to the invention is a dynamic causal model based on the concept of Signed Directed Graph (SDG). However, unlike typical SDGs, the Smart Causal Digraph respectively the digraph matrix is organized in rows and columns, where rows represent plant assets organized by topological connectivity, and columns symbolize the specific propagation carriers considered in this approach, i.e., Temperature (T), Pressure/Differential Pressure (P/ΔP), Flow (F), Sensor Signal (SS), Actuator Signal (AS), and Controller Signal (SS). Such a structured topology allows for easy representations in numerical formats, for instance, connectivity matrices. A digraph matrix is typically generated dynamically upon detection of a disturbance. As well the at least two directed disturbance propagation paths from a propagation carrier at the disturbed plant component to a disturbed carrier at a subsequent plant component are typically generated dynamically.

An SCDG node respectively the node-elements of the digraph matrix embody the role of a given plant asset / plant component (row respectively column) within a propagation carrier (column respectively row). Most specifically, the likelihood of a plant asset respectively a plant component to propagate a fault transported by a given carrier is represented. Columns corresponding to propagation carriers of type Product (T, P/ΔP, and F) are populated with nodes representing plant assets in contact with the material flow (e.g., valves, pipes, or tanks), whereas columns corresponding to propagation carriers of type Information (SS, AS, and CS) are populated with nodes representing plant assets within logical control loops (e.g. sensors, actuators and controllers).

For the connectivity of the nodes within rows and columns, three types of links are defined, namely: Directed Link (DL), Component Inherent Link (CIL), and Information Link (IL). A Directed Link (DL) relates nodes within a column and represents the existent physical connection among the plant assets. A Component Inherent Link (CIL), in turn, relates nodes within a row and symbolizes existing bonds between variables in a determined plant asset due to a physical principle, for instance, the underlying relation temperature-pressure in a chemical reactor (due to the ideal gas law). Finally, an Information Link (IL) symbolizes the communication path between two elements in a control loop, and can connect different rows and columns.

Unlike SDGs, Smart Causal Digraphs are dynamically generated in an event-triggered basis, i.e., an individual SCDG is constructed when a disturbance (or process alarm) is detected and a diagnosis procedure is launched. The particular SCDG (Smart Causal Digraphs) for that event considers up-to-date information of the process and its assets respectively components, thus allowing an accurate description of the plant abnormal situation and therefore yielding better diagnostic results. Topological information of the plant (e.g. connectivity, flow directionality and static characteristics of the plant assets) required during the generation of the SCGD is extracted from a plant topology model for example (e.g. a P&ID enriched with plant asset information in a computer-readable format e.g. CAEX/AutomationML topology model as described in *IEC 62424 Specification for representation of process control engineering requests in P&I diagrams and data exchange between P&ID tools and PCE-CAE*), whereas dynamic process information can be extracted from the control system (e.g. DCS) or from a data server (e.g. an OPC server). Note here that both online measurements as well as historical logs can be used by the methodology depending whether an online or offline analysis is required.

The overall likelihood value for each sequence is derived from the multiplication of the respective likelihood values of the node-elements of the sequence path through the two-dimensional digraph matrix. In case, that at least one node element has the likelihood value zero, that a disturbance will be propagated, the overall likelihood of the respective sequence is also zero and it can be removed from consideration.

Providing the ranking of the sequences respectively the ranking of the propagation path to a user interface enables for example a graphical presentation of selected most likely sequences to a user. This is an additional measure to assist the operator of the plant to handle a respective disturbance.

There are several advantages of the method according to the invention, for example:
- It constitutes a tool to facilitate decision support within root-cause tracking and management of alarm systems. It allows the operator to verify root-cause hypothesis by presenting possible propagation paths sorted by expected likelihood and limiting possible zones of propagation.
- The method allows dynamic and event-triggered model generation which makes it highly-suitable of plant abnormal situation analysis as it considers up-to-date process and topology data in each generation.
- The method is based on a model aggregation concept which allows for knowledge reuse and thereby, yields a significant effort and time reduction during new implementations.
- The invention is valid for application in both online and offline plant abnormal situation analysis.
- The applicability of the method is not restricted only to automated fault diagnosis but can also be applied for alarm grouping.
- The method can be used in combination with other approaches, e.g. data-driven-based methods. Its fault isolation capabilities can be exploited to reduce the number of process tags to be analyzed by complementary signal-based or statistically-based methods which may result in significant time savings.
- The system-undependability of the invention guarantees its effective implementation in projects of different nature.
- The diagnostics resolution of the method is adjustable. Both standard plant asset catalogues of general validity as well as vendor-specific catalogues of higher precision can be stored in the Propagation Look-Up Table (PLUT) and used according to the required diagnostics resolution and knowledge availability.
- The method addresses the problem of complex crossed-propagation, and allows the user to get an insight about the physics of the fault propagation or plant abnormal situation.

According to a further embodiment of the invention the propagation carriers are subdivided into a type *'product'* such as pressure, flow, and temperature and a type *'information'* such as sensor-, controller- and actuator- signals. The propagation of a carrier of the type *'product'* is related to the physical process as such and subject to physical rules so that a likelihood of propagation of a carrier of the type *'product'* is determinable rather clearly.

The likelihood of a propagation of a carrier of the type *'information'* is not subject to direct physical rules, moreover it can be expected, that the propagation either occurs in case of a working information structure or it does *not* take place in case of a defect information structure. Assuming a faultless information structure a further embodiment of the invention is characterized in that the node-element values of the look-up table for the propagation carriers of the type *'information'* are set to 100%.

According to a further embodiment of the invention the node-element values of the look-up table for the propagation carriers of the type 'product' are pre-determined at least in part according to plant-system-independent characteristics. This might be for example based on a reliability value for a component such as a valve, which typically can be retrieved from a catalogue of the manufacturer. Those values are rather reliable, since they are based on a large statistical base.

According to another embodiment of the invention the node-element values of the look-up table for the propagation carriers of the type 'product' are pre-determined at least in part according to plant-system-dependent characteristics. Thus it is possible for example to establish a self-learning monitoring system within the plant, which automatically generates a data base with measured plant-system-dependent characteristics learned in the past.

According to another embodiment of the invention the steps of the method are automatically performed by a software program product running on the computing device upon detection of a disturbance within the plant topology. The analysis of plant disturbance propagation is only useful in case of a disturbance. Triggering automatically the beginning of the analysis upon the detection of a disturbance enables prevents a loss of time until receiving the result of the analysis.

According to a further variant of the invention the two-dimensional matrix and/or the at least two directed disturbance propagation paths are newly determined upon detection of the disturbance. Since each disturbance can be assumed to be unique the two-dimensional digraph matrix and the at least two digraphs have to be newly calculated as base for the analysis.

According to another embodiment of the invention a displaying device is connected with the computing device, wherein at least a part of the network-topology containing at least most of the plant components affected by the propagation paths is displayed thereon and wherein the plant components of the highest ranked propagation path are highlighted. This helps the user to have a fast overview on the situation in the disturbed plant and to initiate suitable action to eliminate the disturbance.

According to a further embodiment of the invention the plant components of the not highest ranked propagation paths are highlighted differently from the components of the highest ranked propagation path. Also this is a measure to provide information clearly arranged to the user.

Further advantageous embodiments of the invention are mentioned in the dependent claims.

The invention will now be further explained by means of an exemplary embodiment and with reference to the accompanying drawings, in which:
- Fig. 1: shows exemplary propagation carriers in process facilities,
- Fig. 2: shows an example of a part of a plant topology,
- Fig. 3: shows an exemplary two-dimensional digraph matrix,
- Fig. 4: shows a fragment of an exemplary propagation look-up table,
- Fig. 5: shows an exemplary graphic of a network-topology with node elements and
- Fig. 6: shows a computing environment.

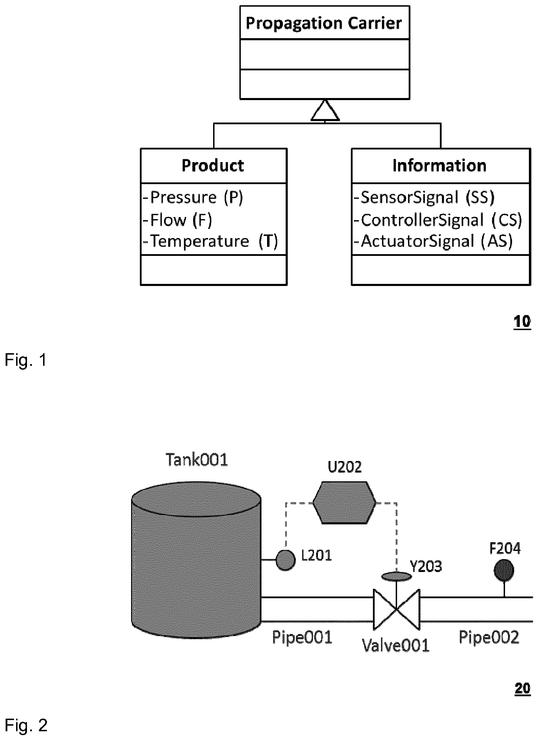

Figure 1 shows exemplary propagation carriers in process facilities in a sketch 10. The propagation carriers are subdivided in the type 'product' with the carriers 'pressure', 'flow' and 'temperature' and in the type 'information' with the carriers 'sensor signal', control signal' and 'actuator signal'.

Figure 2 shows an example of a part of a plant topology in a sketch 20. A tank with the component name 'Tank001' is fluidic connected with two pipe segments named 'Pipe001' and 'Pipe002', wherein a valve named 'Valve001' is foreseen inbetween. At the end of 'Pipe002' a flow sensor 'F204' is foreseen. A controller 'U202' is foreseen to control the 'Valve001' according to a pressure measured by a pressure sensor 'L201'.

In order to illustrate the dynamic generation of the SCDG (Smart Causal Digraph), the following example has to be considered. In the system section depicted in the sketch 20, a flow disturbance is detected in 'Pipe002' by means of flow sensor 'F204'. The corresponding flow alarm with status 'high' is activated and shown to the operator. An automatic diagnosis is started and accordingly a SCDG (Smart Causal Digraph) for the specific event is generated. The resulting SCDG reveals 4 possible propagation paths, namely:
- F204 (SS)←Pipe002 (F) ←Valve001 (F) ←Pipe001 (F) ←Tank001 (F)
- F204 (SS) ←Pipe002 (F) ←Valve001 (F) ←Y203 (A) ←ControllerU202 (CS) ←L201 (SS) ←Tank001 (F)
- F204 (SS)←Pipe002 (F) ←Valve001 (F) ←Pipe001 (F) ←Pipe001 (P/ ΔP) ←Tank001 (P/ΔP)
- F204 (SS)←Pipe002 (F) ←Pipe002 (P/ ΔP) ←Valve001 (P/ ΔP) ←Pipe001 (P/ ΔP) ←Tank001 (P/ΔP)

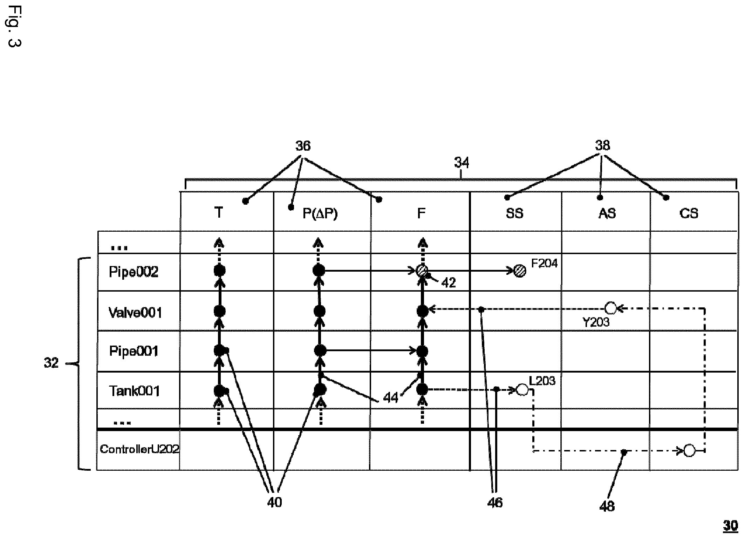

The corresponding exemplary two-dimensional digraph matrix 30 with the respective causal model is shown in Figure 3. The digraph matrix 32 comprises rows of plant components 32 and columns of propagation carriers 34, which are subdivided in the type 'product' 36 and in the type 'information' 38.

For the likelihood evaluation of the possible root-cause paths, the likelihood of each node-element 40 within the propagation carriers 38 of type 'product' 36 must be determined. Subsequently, such single values are multiplied to determine the accumulated overall likelihood of the path respectively sequence. This procedure is done by a systematic access of the Propagation Look-Up Table (PLUT), which is stored within the data memory of a computing device. A node element of a disturbed plant component 42 is shown as the end node of all paths, which is linked to the flow sensor 'F204'. Directed links are marked with continuous arrows 44, component inherent links are marked with dashed arrows 46 and information links are marked with dashed dotted arrows 48.

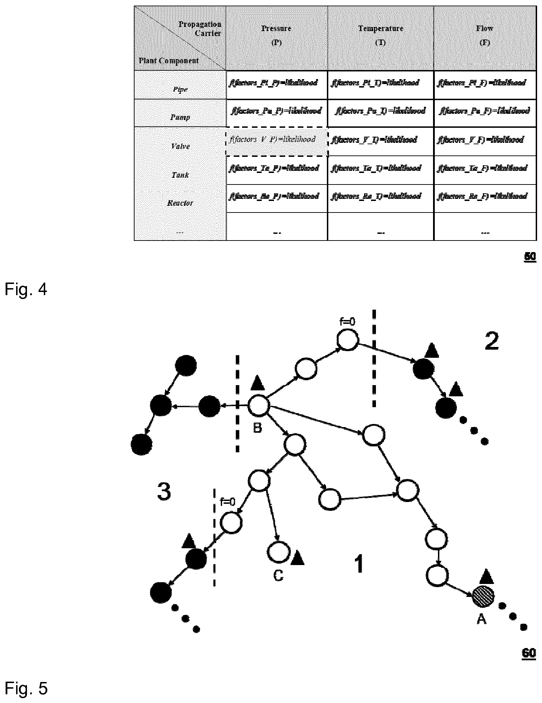

Figure 4 shows a fragment of an exemplary Propagation Look-Up Table (PLUT) in a sketch 50. As depicted the Propagation Look-Up Table represents a reusable and cumulative library of plant assets / components and their corresponding likelihood evaluation functions for propagation carriers of the type 'product' (i.e. temperature, pressure, and flow). Each cell of the Propagation Look-Up Tables (PLUT) allows to assess, in function (f) of the dynamic and static characteristics of a determined plant asset, how likely it is that a given fault carrier overpasses that plant asset and continues its propagation towards the next connected plant component.

*f* is a given function which might be expressed, depending on the case, in a numerical form, as *if-then rules, fuzzy logic,* or as any other suitable representation. Factors are of the form *factors_Item_Carrier*, with *Pi*=*Pipe, Pu*=*Pump, V*=*Valve, Ta*=*Tank,* and *Re*=*Reactor,* and *P*=*Pressure, T*=*Temperature,* and *F*=*Flow.* Likelihood may be a qualitative or quantitative value.

Consider for instance the cell highlighted with the dotted box. Here, both evaluation function *(f)* and disturbance-related factors (*factors_V_P*) required for the likelihood estimation of a pressure carrier overpassing a valve can be retrieved by look-up.

From the knowledge management perspective, the Propagation Look-Up Table (PLUT) can be regarded as an extensible knowledge source based on the concept of additive aggregation, i.e. new and refined knowledge can be added in accordance to the current information requirements. Such a knowledge-base is defined in first instance for a set of standard plant assets, i.e. a vendor-independent catalogue of plant devices commonly found in process facilities (e.g. generic valve and generic centrifugal pump). This property allows the methodology to be system-independent, and guarantees its effective and intuitive applicability in projects of different nature.

Notice however, that the Propagation Look-Up Tables (PLUT) also allows the addition of vendor-specific or technology-specific catalogues. This fact, nevertheless, does not go against the philosophy of non-system dependability but rather constitutes a resource to refine the precision and exactness of the evaluation functions.

Note here that the definition of the propagation functions is not constrained to a specific methodology, as a matter of fact, it can be carried out by different approaches, for instance, simulation, abstraction of expert know-how, or process data analysis.

Figure 5 shows an exemplary graphic of a network-topology with node elements in a sketch 60. By means of the event-triggered and systematic application of the two diagnostic artefacts described in the previous sections (i.e. the SCDG and the PLUT), this inventive methodology can yield a dynamic set of propagation paths sorted based upon their respective likelihoods and thereby isolate disturbance zones, as shown in the schematic of Figure 4. In the example depicted in such schematic, one disturbance or process alarm was detected in node A (highlighted in hatched), as well as in other nodes marked with a triangle. The operator wants to know which of the observed alarms are interrelated, i.e., are caused by a common disturbance, and which could be the possible root-causes of the alarm observed in node A. Accordingly, a diagnosis procedure based on SDGD and PLUT is executed and different propagation routes are identified. Based on the highest propagation likelihoods, the zone highlighted in white (Zone 1) is displayed. From here, the operator can infer that alarms in nodes A, B, and C are interrelated, and that only node B could be the source of the disturbance/alarm in A as there is no other directed propagation path linking A to other disturbed nodes. This information can be used for the operator not only for root-cause determination but for the interpretation of process alarms. Note here that alarms in the same propagation zone could be automatically associated and shown to the operator as alarm-groups, which might significantly reduce the complexity of the alarm management by preventing alarm floods. Besides, if complementary diagnosis methods are used (e.g. data driven approaches), these could concentrate efforts on analyzing tags within the isolation zone identified which might yield an important computer-effort reduction and significant time savings.

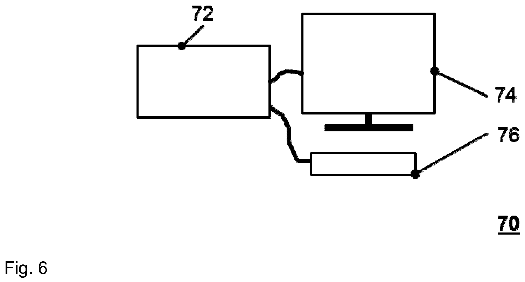

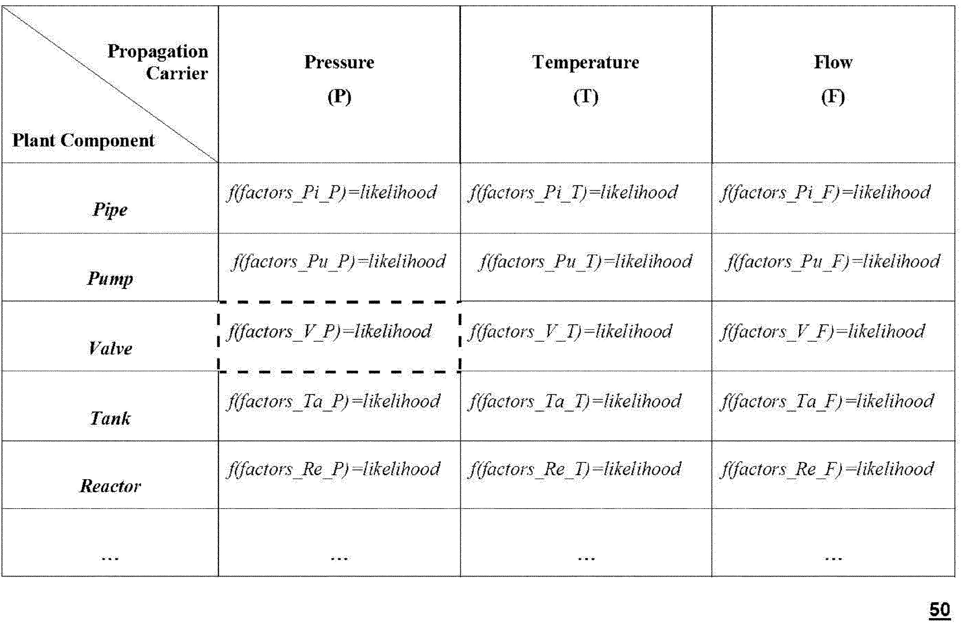

Figure 6 shows a computing environment 70 with a computing device 72, a displaying device 74 and an input device 76.

### List of reference signs

- 10: exemplary propagation carriers in process facilities
- 20: example of a part of a plant topology
- 30: exemplary two-dimensional digraph matrix
- 32: row of plant components
- 34: column of interrelated propagation carriers
- 36: propagation carriers of the type 'product'
- 38: propagation carriers of the type 'information'
- 40: node-elements of the digraph matrix
- 42: node element of disturbed plant component
- 44: directed link
- 46: component inherent link
- 48: information link
- 50: fragment of an exemplary propagation look-up table
- 60: exemplary graphic of a network-topology with node elements
- 70: computing environment
- 72: computing device
- 74: displaying device
- 76: input device

## Claims

1. Method for analysis of production plant disturbance propagations applicable to any continuous or batch process in industrial facilities ranging from chemical, pharmaceutical, nuclear, to oil & gas business industries, using a computing device (72) with a data memory linked to the control system of the plant, **characterized in that**
• a two-dimensional digraph matrix (30) describing at least a disturbed part of a disturbed plant topology (20) is event-triggered dynamically generated and stored within the data memory of the computing device (72) when a disturbance in the plant is detected by the control system of the plant,
• the columns of the digraph matrix (30) represent plant components (32) organized by topological connectivity and wherein the rows represent specific interrelated propagation carriers (34),
• at least two directed disturbance propagation paths from a propagation carrier (34) at a disturbed plant component to a disturbed carrier at a subsequent plant component are pre-determined which each define a sequence of node-elements (40) within the digraph matrix (30), and
comprising the following steps:
• providing a look-up table (50) with respective node-element values describing the likelihood, that a given propagation carrier (34) continues its propagation towards the next connected plant component (32),
• multiplying the respective likelihood values of the node-elements (40) of each sequence so that an overall likelihood value for each sequence is derived therefrom,
• ranking the sequences according to their overall likelihood,
• providing the ranking of the sequences respectively the ranking of the propagation path to a user interface, wherein providing the ranking of the sequences respectively the ranking of the propagation path to the user interface provides an additional measure to assist an operator of the plant to handle a respective disturbance and provides automated fault diagnosis and alarm management.

2. Method according to claim 1, wherein the propagation carriers (34) are subdivided into a type *'product'* (36) such as pressure, flow, and temperature and a type *'information'* (38) such as sensor-, controller- and actuator- signals.

3. Method according to claim 2, wherein the node-element values of the look-up table (50) for the propagation carriers of the type *'information'* (38) are set to 100%.

4. Method according to claim 2 or 3, wherein the node-element values of the look-up table (50) for the propagation carriers of the type 'product' (36) are pre-determined at least in part according to plant-system-independent characteristics.

5. Method according to claim 2 to 4, wherein the node-element values of the look-up table (50) for the propagation carriers of the type 'product' (36) are pre-determined at least in part according to plant-system-dependent characteristics.

6. Method according to any of the proceeding claims, wherein the steps of the method are automatically performed by a software program product running on the computing device (72) upon detection of a disturbance within the plant topology (20).

7. Method according to claim 6, wherein the two-dimensional digraph matrix (30) and/or the at least two directed disturbance propagation paths are newly determined upon detection of the disturbance.

8. Method according to any of the proceeding claims, wherein a displaying device (74) is connected with the computing device (72), wherein at least a part of the network-topology containing at least most of the plant components affected by the propagation paths is displayed thereon and wherein the plant components of the highest ranked propagation path are highlighted.

9. Method according to claim 8, wherein the plant components of the not highest ranked propagation paths are highlighted differently from the components of the highest ranked propagation path.

## Patentansprüche

1. Verfahren zur Analyse der Störungsausbreitungen in einer Produktionsanlage, das auf einen beliebigen kontinuierlichen oder Chargenprozess in industriellen Einrichtungen anwendbar ist, die von der chemischen, pharmazeutischen, kerntechnischen bis zur Öl- und Gasindustrie reichen, unter Verwendung einer Rechenvorrichtung (72) mit einem Datenspeicher, der mit dem Steuersystem der Anlage verknüpft ist, **dadurch gekennzeichnet, dass**
• eine zweidimensionale Digraphmatrix (30), die mindestens ein gestörtes Teil einer gestörten Anlagentopologie (20) beschreibt, ereignisgetriggert dynamisch generiert und innerhalb des Datenspeichers der Rechenvorrichtung (72) gespeichert wird, wenn eine Störung in der Anlage durch das Steuersystem der Anlage detektiert wird,
• die Spalten der Digraphmatrix (30) Anlagenkomponenten (32) repräsentieren, die durch topologische Konnektivität organisiert sind, und wobei die Zeilen spezifische, in Beziehung zueinanderstehende Ausbreitungsträger (34) repräsentieren,
• mindestens zwei gerichtete Störungsausbreitungspfade von einem Ausbreitungsträger (34) an einer gestörten Anlagenkomponente zu einem gestörten Träger an einer nachfolgenden Anlagenkomponente vorab bestimmt werden, die jeweils eine Sequenz von Knotenelementen (40) innerhalb der Digraphmatrix (30) definieren, und
umfassend die folgenden Schritte:
• Bereitstellen einer Nachschlagtabelle (50) mit jeweiligen Knotenelementwerten, die die Wahrscheinlichkeit beschreiben, dass ein gegebener Ausbreitungsträger (34) seine Ausbreitung in Richtung der nächsten verbundenen Anlagenkomponente (32) fortsetzt,
• Multiplizieren der jeweiligen Wahrscheinlichkeitswerte der Knotenelemente (40) von jeder Sequenz, so dass davon ein Gesamtwahrscheinlichkeitswert für jede Sequenz abgeleitet wird,
• Ordnen der Sequenzen nach Rang gemäß ihrer Gesamtwahrscheinlichkeit,
• Bereitstellen des Rangs der Sequenzen beziehungsweise des Rangs des Ausbreitungspfads an eine Benutzerschnittstelle, wobei Bereitstellen des Rangs der Sequenzen beziehungsweise des Rangs des Ausbreitungspfads an die Benutzerschnittstelle ein zusätzliches Mittel bereitstellt, um einen Bediener der Anlage darin zu unterstützen, mit einer jeweiligen Störung umzugehen, und automatisierte Fehlerdiagnose und Alarmmanagement bereitstellt.

2. Verfahren nach Anspruch 1, wobei die Ausbreitungsträger (34) in einen Typ *'Produkt'* (36), wie Druck, Fluss und Temperatur, und einen Typ *'Information'* (38) unterteilt werden, wie Sensor-, Steuer- und Aktorsignale.

3. Verfahren nach Anspruch 2, wobei die Knotenelementwerte der Nachschlagtabelle (50) für die Ausbreitungsträger des Typs *'Information'* (38) auf 100 % gesetzt sind.

4. Verfahren nach Anspruch 2 oder 3, wobei die Knotenelementwerte der Nachschlagtabelle (50) für die Ausbreitungsträger des Typs *'Produkt'* (36) mindestens teilweise gemäß anlagensystemunabhängigen Charakteristika vorab bestimmt werden.

5. Verfahren nach Anspruch 2 bis 4, wobei die Knotenelementwerte der Nachschlagtabelle (50) für die Ausbreitungsträger des Typs *'Produkt'* (36) mindestens teilweise gemäß anlagensystemabhängigen Charakteristika vorab bestimmt werden.

6. Verfahren nach einem der vorhergehenden Ansprüche, wobei die Schritte des Verfahrens automatisch durch ein Softwareprodukt, das auf der Rechenvorrichtung (72) läuft, nach Detektierung einer Störung innerhalb der Anlagentopologie (20) durchgeführt werden.

7. Verfahren nach Anspruch 6, wobei die zweidimensionale Digraphmatrix (30) und/oder die mindestens zwei gerichteten Störungsausbreitungspfade bei Detektierung der Störung neu bestimmt werden.

8. Verfahren nach einem der vorhergehenden Ansprüche, wobei eine Anzeigevorrichtung (74) mit der Rechenvorrichtung (72) verbunden ist, auf der mindestens ein Teil der Netzwerktopologie, die mindestens die meisten der Anlagekomponenten enthält, die durch die Ausbreitungspfade betroffen sind, angezeigt wird, und wobei die Anlagekomponenten mit dem höchstrangigen Ausbreitungspfad optisch hervorgehoben sind.

9. Verfahren nach Anspruch 8, wobei die Anlagekomponenten der nicht höchstrangigen Ausbreitungspfade in anderer Weise optisch hervorgehoben werden als die Komponenten des höchstrangigen Ausbreitungspfads.

## Revendications

1. Procédé d'analyse de propagations de perturbations d'installation de production applicable à n'importe quel processus continu ou par lots d'installations industrielles allant des industries chimiques, pharmaceutiques, nucléaires aux industries du pétrole et du gaz, en utilisant un dispositif de calcul (72) doté d'une mémoire de données lié au système de commande de l'installation, **caractérisé en ce que**
• une matrice de graphe orienté bidimensionnelle (30) décrivant au moins une partie perturbée d'une topologie d'installation perturbée (20) est déclenchée par événement, générée dynamiquement et mémorisée dans la mémoire de données du dispositif de calcul (72) quand une perturbation dans l'installation est détectée par le système de commande de l'installation,
• les colonnes de la matrice de graphe orienté (30) représentent des composants d'installation (32) organisés par connectivité topologique et dans lequel les rangées représentent des porteurs de propagation interreliés spécifiques (34),
• au moins deux chemins de propagation de perturbations dirigés depuis un porteur de propagation (34) au niveau d'un composant d'installation perturbé vers un porteur perturbé au niveau d'un composant d'installation suivant sont prédéterminés, lesquels définissent chacun une séquence d'éléments de noeud (40) dans la matrice de graphe orienté (30), et comprenant les étapes suivantes :
• la fourniture d'une table de consultation (50) avec des valeurs d'éléments de noeud respectives décrivant la probabilité qu'un porteur de propagation donné (34) continue sa propagation vers le composant d'installation connecté suivant (32),
• la multiplication des valeurs de probabilité respectives des éléments de noeuds (40) de chaque séquence de manière à dériver de celles-ci une valeur de probabilité globale pour chaque séquence,
• le classement des séquences conformément à leur probabilité globale,
• la fourniture du classement des séquences respectivement au classement du chemin de propagation à une interface utilisateur, dans lequel la fourniture du classement des séquences respectivement au classement du trajet de propagation à l'interface utilisateur fournit une mesure supplémentaire afin d'aider un opérateur de l'installation à gérer une perturbation respective et fournit une gestion de diagnostic et d'alarme de pannes automatisée.

2. Procédé selon la revendication 1, dans lequel les porteurs de propagation (34) sont subdivisés en un type *"produit"* (36) tel que pression, débit, et température et un type *"information"* (38) tel que signaux de capteur, contrôleur et actionneur.

3. Procédé selon la revendication 2, dans lequel les valeurs d'éléments de noeud de la table de consultation (50) pour les porteurs de propagation du type *"information"* (38) sont posées à 100 %.

4. Procédé selon la revendication 2 ou 3, dans lequel les valeurs d'éléments de noeud de la table de consultation (50) pour les porteurs de propagation du type "produit" (36) sont prédéterminées au moins en partie en fonction de caractéristiques indépendantes des systèmes de l'installation.

5. Procédé selon les revendications 2 à 4, dans lequel les valeurs d'éléments de noeud de la table de consultation (50) pour les porteurs de propagation du type "produit" (36) sont prédéterminées au moins en partie en fonction de caractéristiques dépendantes des systèmes de l'installation.

6. Procédé selon l'une quelconque des revendications précédentes, dans lequel les étapes du procédé sont réalisées automatiquement par un produit-programme logiciel s'exécutant sur le dispositif de calcul (72) à la détection d'une perturbation dans la topologie de l'installation (20).

7. Procédé selon la revendication 6, dans lequel la matrice de graphe orienté bidimensionnelle (30) et/ou les au moins deux chemins de propagation de perturbations dirigés sont déterminés à nouveau à la détection de la perturbation.

8. Procédé selon l'une quelconque des revendications précédentes, dans lequel un dispositif d'affichage (74) est connecté au dispositif de calcul (72), dans lequel au moins une partie de la topologie de réseau contenant au moins la plupart des composants d'installation affectés par les chemins de propagation est affichée sur celui-ci et dans lequel les composants d'installation du chemin de propagation classé au niveau le plus haut sont mis en évidence.

9. Procédé selon la revendication 8, dans lequel les composants d'installation des chemins de propagation non classés au niveau le plus haut sont mis en évidence d'une manière différente des composants du chemin de propagation classé au niveau le plus haut.
